# EUROPEAN PATENT APPLICATION

(11) **EP 4 796 485 A1**
(43) Date of publication of application: **26.08.2026**
(21) Application number: 25382165.6
(22) Date of filing: 24.02.2025
(51) Int. Cl.: B66B 11/04, B66B 19/00

(54) **ELEVATOR MACHINE AND ELEVATOR SYSTEM COMPRISING AN ELEVATOR MACHINE**

(71) Applicant: Otis Elevator Company, Farmington, Connecticut 06032 (US)
(72) Inventor: Gil, Santiago, 458918 Leganes, Madrid (ES); Fito, Lucia, 128918 Leganes, Madrid (ES); Villar, Enrique, 128918 Leganes, Madrid (ES); Sancho, Jose Manuel, 128918 Leganes, Madrid (ES); Cutillas, Diego, 128918 Leganes, Madrid (ES); Garcia, Carlos, 128918 Leganes, Madrid (ES); Monzon, Andres, 128918 Leganes, Madrid (ES)
(74) Representative: Schmitt-Nilson Schraud Waibel Wohlfrom Patentanwälte Partnerschaft mbB

(57) **Abstract**

An elevator machine (5) for driving an elevator car (6) in an elevator system (2) comprises a shaft (12) that extends along an axial direction (A) and includes a sheave portion (26) for coupling the shaft (12) to at least one tension member (3), in particular to at least one belt, that is coupled to the elevator car (6). The elevator machine (5) further comprises a motor (9) that is configured for rotationally driving the shaft (12) and a brake (20) for braking rotation of the shaft (12). The motor (9), the brake (20) and the sheave portion (26) are arranged along the axial direction (A) such that the brake (20) is arranged between the motor (9) and the sheave portion (26).

## Description

The invention relates to an elevator machine for driving an elevator car in an elevator system. The invention further relates to an elevator system comprising such an elevator machine, and to a method of installing an elevator machine in a hoistway of an elevator system

An elevator system typically comprises at least one elevator car that is configured for traveling along the hoistway extending between a plurality of landings, at least one guide rail for guiding the movement of the elevator car along a hoistway, and an elevator machine that is configured for driving the elevator car.

The elevator machine comprises at least one motor for moving the elevator car along the hoistway, and at least one brake for braking and stopping the movement of the elevator car.

A considerable amount of space is needed for installing the elevator machine and the at least one guide rail in the hoistway without interfering with each other.

It would be beneficial to provide an improved elevator machine that allows for using the space provided in the hoistway of an elevator system more efficiently as it occupies less space when it is installed in the hoistway without interfering with the at least one guide rail of the elevator system.

According to an exemplary embodiment of the invention, an elevator machine for driving an elevator car in an elevator system comprises a rotatable shaft, two independent bearing stands, a motor that is configured for rotationally driving the shaft; and a brake for braking rotation of the shaft. The shaft extends along and is rotatable around an axial direction. The shaft includes a sheave portion that is configured for coupling the shaft to at least one tension member, in particular to at least one belt, that is coupled to the elevator car. The motor, the brake and the sheave portion are arranged along the axial direction with the brake being arranged between the motor and the sheave portion.

By integrating the brake coil into the bearing stand, the extension of the elevator machine along the axial direction may be reduced. In an elevator machine according to an exemplary embodiment of the invention, the distance between an outer end face of the elevator machine facing away from the sheave portion and a center of the sheave portion may, for example, be less than 150 mm, the distance may in particular be less than 140 mm. An elevator machine having a reduced extension along the axial direction may be installed more efficiently in the hoistway of an elevator system.

Reducing the extension of the elevator machine by arranging the brake between the motor and the sheave portion may in particular allow for reducing the distance between at least one guide rail that is provided in the hoistway for guiding the movement of the elevator car and an adjacent sidewall of the hoistway. Consequently, the space in the hoistway may be used more efficiently since the horizontal footprint of the elevator car may be increased and/or the horizontal footprint of the hoistway may be reduced.

In addition, an elevator machine according to an exemplary embodiment of the invention allows for reducing the complexity of the elevator machine. This may allow for standardizing the manufacturing process of the elevator machine and for reducing its production costs.

In the following, a number of optional features of an elevator machine according to exemplary embodiments of the invention are set out. Unless explicitly stated otherwise, these features may be realized in particular embodiments, alone or in combination with any of the other features.

The brake may comprise a brake disc that is non-rotatably coupled to the shaft in order to rotate concurrently with the shaft and at least one plunger that is movable along the axial direction between an engaged position in which it engages with the brake disc for braking rotation of the brake disc and a released position in which it is not engaged with the brake disc. The brake may further comprise at least one actuator that is configured for selectively moving the at least one plunger from the engaged position into the released position when it is activated.

The at least one actuator may be accommodated in a first bearing stand comprising a first bearing rotatably supporting a first portion of the shaft. The first bearing stand may be arranged in, or mounted to, the stator of the motor, in particular at a side of the stator facing the sheave portion of the shaft. Consequently, the at least one actuator may be arranged in, or mounted to, the stator as well. Such an arrangement allows for a very compact and space saving configuration of the elevator machine.

The brake disc and the at least one plunger may be arranged outside the first bearing stand and/or outside the stator. In such a configuration, the brake disc and the at least one plunger are readily accessible for inspection, maintenance and/or repair.

The brake disc and the at least one plunger may be arranged inside the first bearing stand and/or inside the stator. In such a configuration, the stator protects the brake disc and the at least one plunger from adverse environmental influences, such as impacts, moisture, and/or dirt.

The at least one plunger may be arranged between the motor and the brake disc. In such a configuration, the at least one plunger is configured to move away from the motor for engaging the brake disc and to move towards the motor for releasing the brake disc.

Alternatively, the brake disc may be arranged between the motor and the at least one plunger. In such a configuration, the at least one plunger is configured to move towards the motor for engaging the brake disc and to move away from the motor for releasing the brake disc.

For enhancing the support of the shaft and/or for reducing the load acting onto the first bearing, the elevator machine may further comprise a second bearing stand including a second bearing that rotatably supports a second portion of the shaft. The second bearing stand and the second bearing may, in particular, be arranged on a side of the sheave portion that is opposite to the first bearing stand and to the motor.

For increasing the torque capacity of the elevator machine, the elevator machine may further comprise a spacer structure extending along the axial direction. The spacer structure may, in particular, extend between the first bearing stand and the second bearing stand.

The spacer structure may comprise a plurality of spacer elements extending along the axial direction. At least one of the spacer elements may have a cylindrical shape. Spacer elements having a cylindrical shape have a high load capacity and are easy to produce.

The plurality of spacer elements may be arranged around the shaft forming a cylindrical spacer structure surrounding the shaft. The longitudinal axis of the cylindrical spacer structure may extend coaxially with the shaft. The cylindrical spacer structure may, in particular, include four, five, six, seven, eight, nine, ten, eleven or twelve spacer elements.

In an alternative configuration, the elevator machine may be a spacer-less elevator machine that does not comprise a spacer structure. In an elevator machine according to an exemplary embodiment of the invention, the braking torque that is generated when the brake is activated for braking the rotation of the shaft is absorbed by the first bearing stand and by the stator to which the bearing stand is mounted. Since in an elevator machine according to an exemplary embodiment of the invention no braking torque acts onto the second braking stand, which does not comprise a brake, it may not be necessary to provide a spacer structure for increasing the torque capacity of the second braking stand.

By omitting the spacer structure the weight of the elevator machine may be reduced and the elevator machine may be produced more easily at lower costs.

The sheave portion may comprise a plurality of sheaves. Each sheave may be configured for coupling with a corresponding tension member, such as a belt, respectively. Providing the sheave portion with a plurality of sheaves allows for coupling the shaft of the elevator machine with a plurality of tension members in order to increase the load bearing capacity of the elevator machine. The sheave portion may, in particular, comprise two, three, four or five sheaves.

Exemplary embodiments of the invention further include an elevator system comprising a hoistway extending between a plurality of landings; an elevator car that is configured for traveling along the hoistway between the plurality of landings; at least one guide rail for guiding the movement of the elevator car in the hoistway; at least one tension member, in particular a belt, that is coupled to the elevator car; and an elevator machine according to an exemplary embodiment of the invention. The at least one tension member is coupled to the sheave portion of the elevator machine for allowing the elevator machine to drive the tension member by rotating the shaft.

The at least one guide rail may be arranged in line with the elevator machine along the axial direction. The at least one guide rail may, in particular, be arranged adjacent to an end face of the elevator machine along the axial direction. More particularly, the at least one guide rail may be arranged adjacent to an end face of the elevator machine that is located on a side of the sheave portion that is opposite to the motor.

In an elevator system according to an exemplary embodiment of the invention, the elevator machine may be arranged on a bedplate. The distance between the at least one guide rail and the bedplate may be less than 70 mm. The distance between the at least one guide rail and the bedplate may, in particular, be less than 50 mm. Reducing the distance between the least one guide rail and the bedplate allows for arranging the elevator car close to the bedplate and, consequently, close to an adjacent sidewall of the hoistway. As a result, the space provided in the hoistway may be used more efficiently.

Exemplary embodiments of the invention also include a method of installing at least one guide rail and an elevator machine according to an exemplary embodiment of the invention in a hoistway of an elevator system. The method includes arranging the at least one guide rail and the elevator machine in a configuration in which the at least one guide rail is arranged in line with the elevator machine along the axial direction. The at least one guide rail may in be particular be arranged adjacent to an end face of the elevator machine along the axial direction. More particularly, the at least one guide rail may be arranged adjacent to an end face of the elevator machine that is located on the side of the sheave portion opposite the motor.

The method may include arranging the elevator machine on a bedplate that is provided in the hoistway. The bedplate may be mounted to and supported by a sidewall of the hoistway. The elevator system may comprise a support structure for supporting the bedplate in the hoistway.

In order to increase the space in the hoistway that is available for the elevator car, the method may include arranging the guide rail in a distance of less than 70 mm, in particular in a distance of less than 50 mm, from the bedplate.

The additional features, modifications, and effects described above in relation to an elevator machine according to exemplary embodiments of the invention apply analogously to an elevator system and to a method according to exemplary embodiment of the invention, respectively.

In the following, exemplary embodiments of the invention are described in more detail with respect to the enclosed figures:
Figure 1 depicts a schematic view of an elevator system according to an exemplary embodiment of the invention.
Figure 2 depicts a sectional view of an elevator machine according to an exemplary embodiment of the invention.
Figure 3 depicts a sectional view of an elevator machine according to another exemplary embodiment of the invention.
Figures 4A and 4B respectively depict a conventional elevator machine that is installed in a hoistway of an elevator system from above.
Figures 5A and 5B respectively depict an elevator machine according to an exemplary embodiment of the invention that is installed in a hoistway of an elevator system from above.

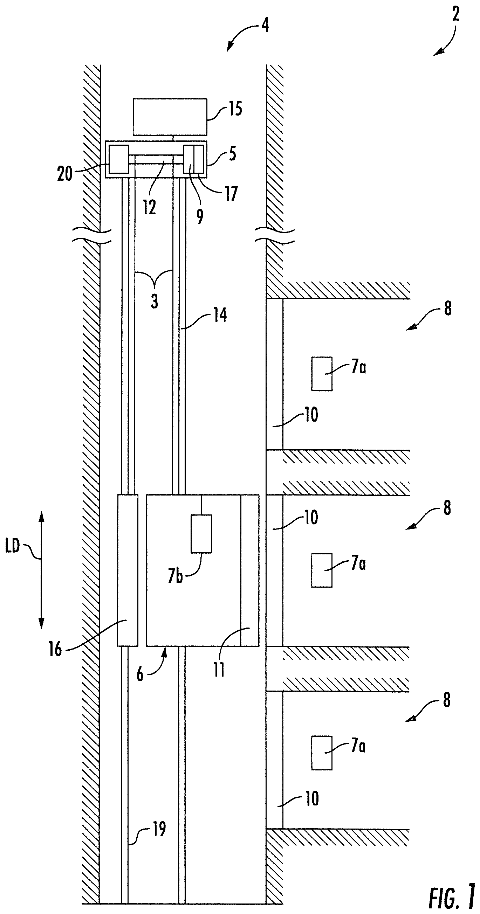

Figure 1 schematically depicts an elevator system 2 according to an exemplary embodiment of the invention.

The elevator system 2 comprises a hoistway 4 extending along a longitudinal direction LD between a plurality of landings 8 located on different floors. The elevator system 2 includes an elevator car 6 that is arranged in the hoistway 4 for being moved along the longitudinal direction LD between the plurality of landings 8. The elevator car 6 may, in particular, be movable along at least one guide rail 14, in particular at least one elevator car guide rail 14, that is provided in the hoistway 4 extending along the longitudinal direction LD.

The longitudinal direction LD may be oriented in a vertical direction, as it is depicted in Figure 1. In an alternative embodiment, which is not depicted in the figures, the longitudinal direction LD may be inclined with respect to the vertical direction.

Although only a single elevator car guide rail 14 is depicted in Figure 1, the elevator system 2 may comprise a plurality of elevator car guide rails 14 extending parallel to each other.

Although only a single elevator car 6 is depicted in Figure 1, exemplary embodiments of the invention may also include elevator systems 2 comprising a plurality of elevator cars 6 moving in one or more hoistways 4.

The elevator car 6 is movably suspended by means of a tension member 3. Although only a single tension member 3 is depicted in Figure 1, exemplary embodiments of the invention may also include elevator systems 2 comprising a plurality of tension members 3.

The at least one tension member 3, which may be a rope or a belt, is coupled to an elevator drive system that in the following will be denoted as elevator machine 5. The elevator machine 5 comprises an electric motor 9 for rotatably driving a shaft 12, and a drive 17 that harnesses and controls the electrical energy supplied to the motor 9. The elevator machine 5 is configured for driving the at least one tension member 3, which is coupled to the shaft 12 via traction, in order to move the elevator car 6 in the hoistway 4 along the longitudinal direction LD between the plurality of landings 8.

The elevator machine 5 is further provided with a brake 20 for braking rotation of the shaft 12 in order to allow for stopping movement of the elevator car 6 and holding the elevator car 6 at a desired position in the hoistway 4.

Optionally, the elevator system 2 may comprise a counterweight 16. The counterweight 16 may be attached to the at least one tension member 3 opposite to the elevator car 6 and configured for moving concurrently and in opposite direction with respect to the elevator car 6. The counterweight 16 may move along at least one guide rail 19, in particular at least one counterweight guide rail 19, that is provided in the hoistway 4 extending along the longitudinal direction LD.

The at least one tension member 3 may be a rope, e.g. a steel cord, or a belt, in particular a coated steel belt. The at least one tension member 3 may be uncoated. Alternatively, the at least one tension member 3 may be coated with a coating, e.g. with a coating having the form of a polymer jacket. In a particular embodiment, the at least one tension member 3 may be a belt comprising a plurality of polymer coated steel cords (not shown). The elevator system 2 may have a traction drive including a traction sheave for driving the at least one tension member 3.

In the exemplary embodiment depicted in Figure 1, a 1:1 roping is employed for suspending the elevator car 6. The type of the roping is, however, not essential for the invention and different kinds of roping, e.g. a 2:1 roping or a 4:1 roping may be employed as well.

A landing door 10 is provided at each of the landings 8. The elevator car 6 is provided with a corresponding elevator car door 11 for allowing passengers to transfer between a landing 8 and the interior of the elevator car 6, when the elevator car 6 is positioned at the respective landing 8.

For moving the elevator car 6 along the hoistway 4 between the different landings 8, the elevator machine 5 may be controlled by an elevator controller 15 of the elevator system 2.

The elevator system 2 is an elevator machine room-less elevator system 2 in which the elevator machine 5 is arranged in an upper portion of the hoistway 4.

Input to the elevator controller 15 may be provided via landing control panels 7a provided on every landing 8, in particular in the vicinity of the landing doors 10, and/or via an elevator car control panel 7b provided inside the elevator car 6.

The landing control panels 7a may comprise elevator hall call buttons and/or destination call buttons. Destination call buttons allow passengers to enter their respective destinations before entering the elevator car 6. In case the landing control panels 7a are equipped with destination call buttons, no elevator car control panel 7b needs to be provided inside the elevator car 6 since the elevator system 2 is fully controlled by the commands input via the landing control panels 7a.

The landing control panels 7a and the elevator car control panel 7b may be coupled with the elevator controller 15 by means of electrical wiring not shown in Figure 1, in particular by an electric bus, or by wireless data connections.

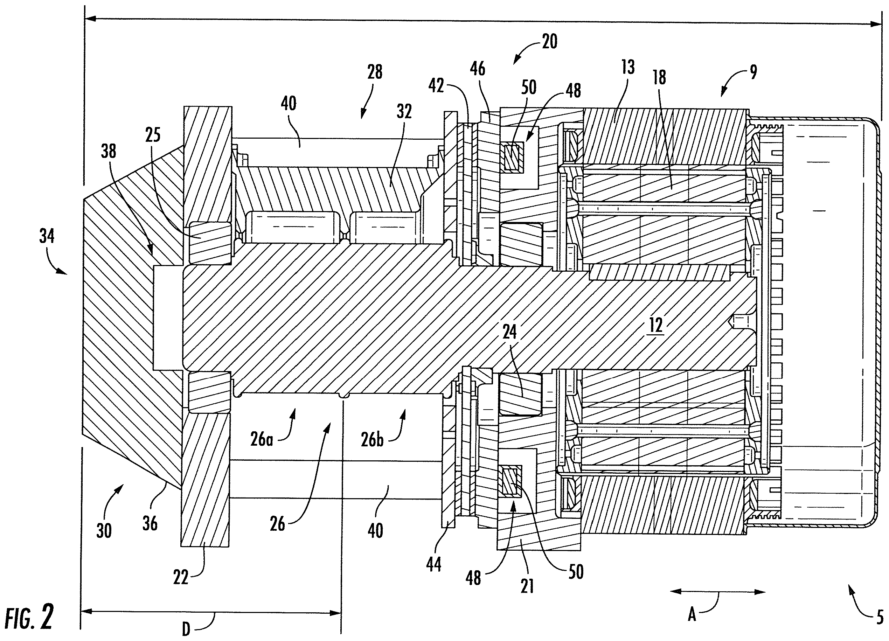

Figure 2 depicts a sectional view of an elevator machine 5 according to an exemplary embodiment of the invention.

The elevator machine 5 comprises a shaft 12 extending along an axial direction A.

The shaft 12 includes a sheave portion 26 that is configured for coupling the shaft 12 with at least one tension member 3, in particular to at least one belt, that is coupled to the elevator car 6 as it is depicted in Figure 1. The at least one tension member 3 is not shown in Figure 2.

In the exemplary embodiment of the elevator machine 20 depicted in Figure 2, the sheave portion 26 includes two sheaves 26a, 26b that are formed adjacent to each other along the axial direction A. Each sheave 26a, 26b is configured for coupling with a corresponding tension member 3, respectively.

In the spatial orientation depicted in Figure 2, the elevator machine 5 comprises from right to left, an electric motor 9 including a stator 13 and a rotor 18 that is coupled to the shaft 12 for rotatably driving the shaft 12, a first bearing stand 21 comprising a first bearing 24 that rotatably supports a first portion of the shaft 12, a brake 20 for selectively braking the rotation of the shaft 12, a spacer structure 28 extending along the axial direction parallel to the shaft 12, in particular along the sheave portion 26 of the shaft 12, a second bearing stand 22 comprising a second bearing 25 rotatably supporting a second portion of the shaft 12, and a sensor arrangement 30. The sensor arrangement 30 comprises a sensor housing 36 having an outer end face 34 and a rotational sensor 38 that is located in the sensor housing 36 and configured for detecting the rotation of the shaft 12.

The first bearing stand 21 may be mounted to, or formed integrally with, the stator 13. The first bearing stand 21 may, in particular, form an end portion of the stator 13 facing the sheave portion 26 of the shaft 12.

The spacer structure 28 extends between the first and second bearing stands 21, 22. The spacer structure 28 may comprise a plurality of spacer elements 40 forming a cylindrical, cage like, spacer structure 28 surrounding the sheave portion 26 of the shaft 12. The spacer elements 40 may have a cylindrical shape. The spacer elements 40 may be mounted to the first and second bearing stands 21, 22, respectively.

The spacer structure 28 is optional. It is possible that a brake 20 according to an exemplary embodiment of the invention does not comprise such a spacer structure 28.

A retainer 32 that at least partially covers the sheave portion 26 may extend between the first and second bearing stands 22, 23.

The brake 20 comprises a brake disc 42 that is non rotatably coupled to the shaft 12 for rotating concurrently with the shaft 12. The brake disc 42 may be linearly movable along the shaft 12 in the axial direction A.

The brake 20 further comprises a stationary braking element 44 that is stationary with respect to the motor 9 and with respect to the first and second bearing stands 22, 23.

The stationary braking element 44 is arranged between the brake disc 42 and the spacer structure 28 along the axial direction A.

The brake 20 further comprises at least one plunger 46 that is movable along the axial direction A between an engaged position in which it engages with the brake disc 42 and urges the brake disc 42 against the stationary braking element 44 for braking rotation of the brake disc 42 and the shaft 12, and a released position in which it does not engage with the brake disc 42 allowing the brake disc 42 and the shaft 12 to rotate freely.

In the exemplary embodiment depicted in Figure 2, the brake disc 42 and the plunger 46 are arranged outside of the first bearing stand 21 and outside of the stator 13.

In an alternative embodiment, the brake disc 42 and the plunger 46 may be arranged inside the first bearing stand 21 and/or inside the stator 13.

The brake 20 comprises at least one elastic element, such as a spring, that is configured for urging the plunger 46 away from the motor 9 towards the brake disc 42 into the engaged position. The at least one elastic element is not depicted in Figure 2.

The brake 20 further comprises at least one actuator 48 that is configured for selectively moving the plunger 46 from the engaged position into the released position for releasing the brake 20. Although two actuators 48 are depicted in Figure 2, a brake 20 according to an exemplary embodiment of the invention may comprise more or fewer than two actuators 48. The brake 20 may, for example, include one, two, three, four, five or six actuators 48. The plurality of actuators 48 may be arranged circumferential around the shaft 12.

Each actuator 48 comprises a solenoid 50 that is configured for generating a magnetic force for pulling the plunger 46 away from the brake disc 42 towards the motor 9 from the engaged position into a released position when an electric current flows through the solenoid 50.

In an alternative embodiment that is not explicitly depicted in the figures, the solenoid 50 may be embedded directly in the first bearing stand 21 instead of providing a separate actuator 48. In such an embodiment, the first bearing stand 21 itself provides the functionality of the actuator 48.

In the exemplary embodiment depicted in Figure 2, the actuators 48 are accommodated in the first bearing stand 21 facing away from the motor 9 towards the plunger 46 that is arranged between the first bearing stand 21 and the brake disc 42. The actuators 48 and the first bearing stand 21 may, in particular, be arranged within the stator 13.

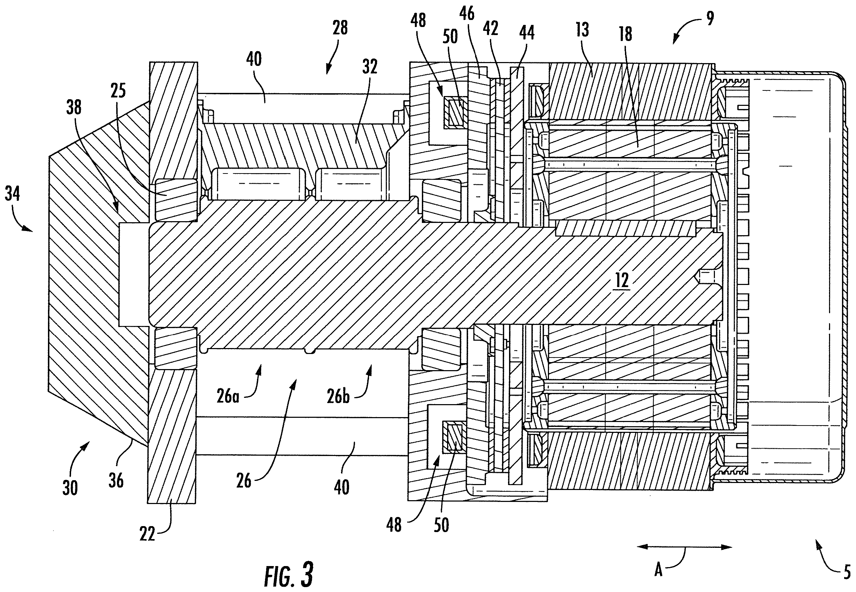

Figure 3 depicts a sectional view of an elevator machine 5 according to another exemplary embodiment of the invention.

The features of the elevator machine depicted in Figure 3 that are identical with the features of the elevator machine depicted in Figure 2 are denoted with the same reference signs and will not be discussed in detail again. The description provided with respect to Figure 2 similarly applies to the corresponding features depicted in Figure 3.

The elevator machine 5 according to the exemplary embodiment depicted in Figure 3 differs from the elevator machine 5 depicted in Figure 2 in that the positions of the first bearing stand 21 and the brake 20 along the axial direction A are interchanged with each other.

In consequence, in the exemplary embodiment depicted in Figure 3, the brake 20 is arranged next to the motor 9 between an end face of the motor 9 facing the first bearing stand 21 and the first bearing stand 21.

In the exemplary embodiment depicted in Figure 3, the positions of the stationary braking element 44 and the plunger 46 along the axial direction A with respect to the brake disc 42 are interchanged as well. Consequently, the plunger 46 is arranged between the first bearing stand 21 and the brake disc 42 on the side of the brake disc 42 facing away from the motor 9, and the stationary braking element 44 is arranged between the motor 9 and the side of brake disc 42 facing the motor 9.

At least one elastic element, which is not depicted in Figure 3, is provided between the first bearing stand 21 and the plunger 46 for elastically urging the plunger 46 towards the brake disc 42 into the engaged position.

The solenoids 50 of the actuators 48 provided in the first bearing stand 21 are configured for pulling the plunger 46 away from the brake disc 42 out of the engaged position towards the first bearing stand 21 into a released position, when an electric current flows through the solenoids 50.

In the exemplary embodiment depicted in Figure 3, the first bearing stand 21 is mounted to or formed integrally with the stator 13 and the brake disc 42, the stationary braking element 44, the plunger 46 and the actuators 48 are arranged in the stator 13.

Integrating the brake 20 into the first bearing stand 21 and/or into the stator 13, as it is depicted in Figures 2 and 3, allows for reducing the length L of the elevator machine 5 along the axial direction A in comparison to a conventional elevator machine 5 in which the brake 20 is provided at the second bearing stand 22, i.e. on the side of the sheave portion 26 that is opposite to the motor 9.

In an elevator machine 5 accordingto an exemplary embodiment of the invention, the distance D between the outer end face 34 of the sensor housing 36 facing away from the sheave portion 26 and a center of the sheave portion 26 may be less than 150 mm, the distance D may in particular be less than 140 mm.

Reducing the length L of the elevator machine 5 along the axial direction A may allow for installing the elevator machine 5 in the hoistway 4 without interfering with the guide rails 14, 19 of the elevator system 2.

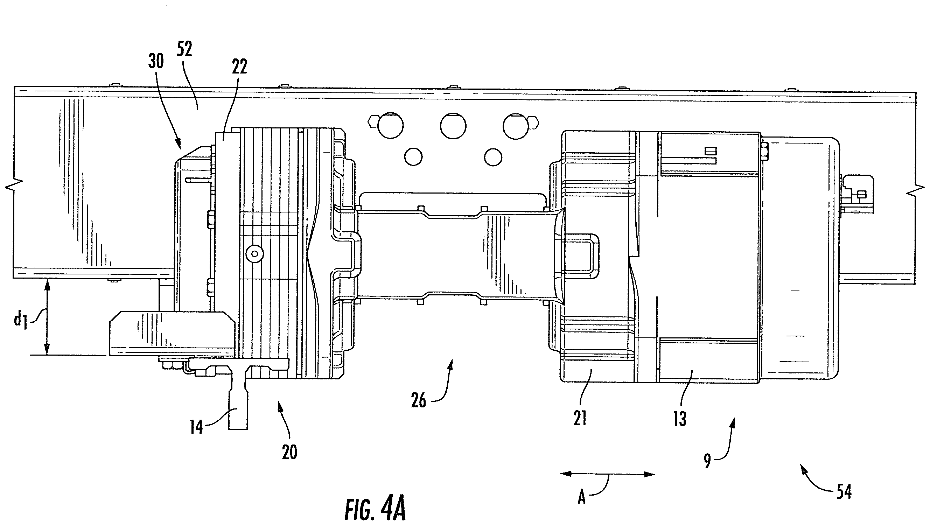

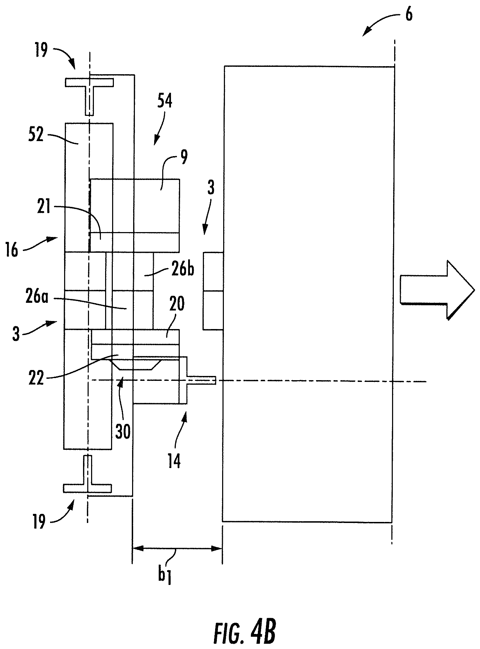

Figures 4A and 4B depict a conventional elevator machine 54 that is installed on a bedplate 52 in a hoistway 4 of an elevator system 2 as it is seen from above. An elevator car guide rail 14 extends vertically, i.e. perpendicularly to the plane of Figures 4A and 4B, past the elevator machine 5.

In order to avoid interference between the elevator car guide rail 14 and the elevator machine 5, in particular the second bearing stand 22 and the brake 20 of the elevator machine 5, the elevator car guide rail 14 needs to be arranged in a minimum distance d₁ from the bedplate 52.

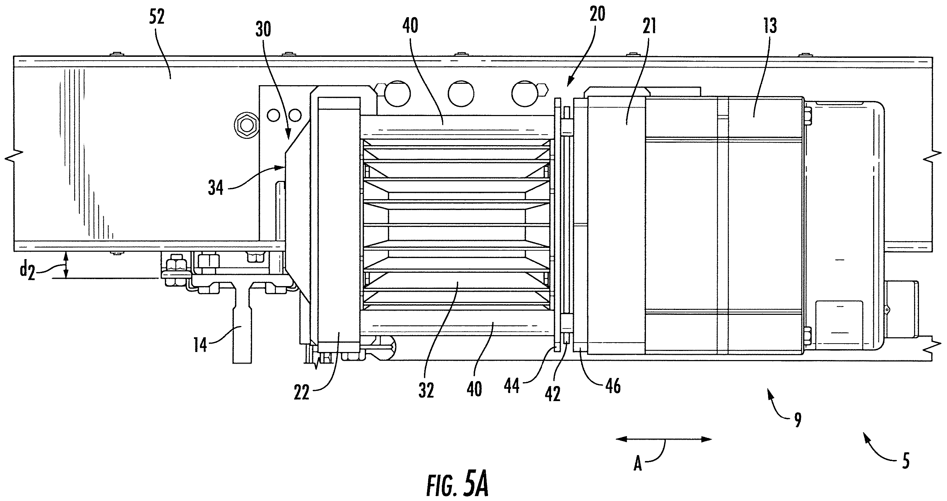

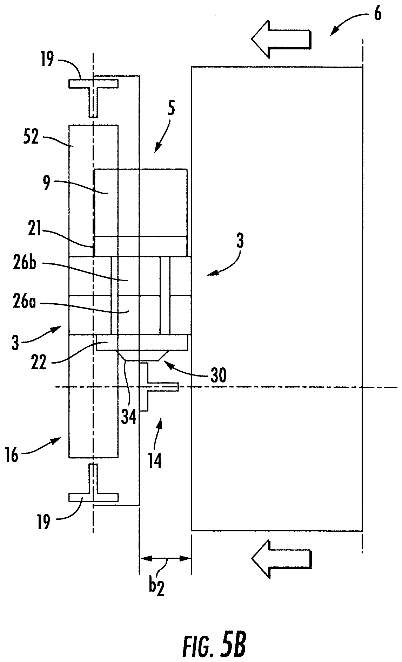

Figures 5A and 5B depict an elevator machine 5 according to an exemplary embodiment of the invention that is installed on a bedplate 52 in a hoistway 4 of an elevator system 2 as it is seen from above. An elevator car guide rail 14 extends vertically, i.e. perpendicularly to the plane of Figures 4A and 4B, by the elevator machine 5.

Due to the reduced length L of an elevator machine 5 according to an exemplary embodiment of the invention, the elevator car guide rail 14 may be arranged closer to the bedplate 52 than in the conventional arrangement depicted in Figures 4A and 4B. The distance between the elevator car guide rail 14 and the bedplate 52 may, in particular, be reduced to a minimum distance d₂ that is significantly smaller than the minimum distance d₁ that is achievable in the conventional arrangement depicted in Figures 4A and 4B.

Consequently, the distance b₁, b₂ between elevator car 6 and the sidewall of the hoistway 4 may by reduced from a first distance b₁ depicted in Figure 4B to a second distance b₂, as it is depicted in Figure 5B.

As a result, when an elevator machine 5 according to an exemplary embodiment of the invention is employed, the horizontal footprint of the elevator car 6 may be increased without increasing the horizontal footprint of the hoistway 4 and/or the footprint of the hoistway 4 may be reduced without reducing the horizontal footprint of the elevator car 6. Consequently, the space provided in the hoistway 4 may be used more efficiently.

While the invention has been described with reference to exemplary embodiments, it will be understood by those skilled in the art that various changes may be made and equivalents may be substituted for elements thereof without departing from the scope of the invention. In addition, many modifications may be made to adopt a particular situation or material to the teachings of the invention without departing from the essential scope thereof. Therefore, the invention is not intended to be limited to the specific embodiments disclosed, but to encompass all embodiments within the scope of the appended claims.

### References

- 2: elevator system
- 3: tension member
- 4: hoistway
- 5: elevator machine
- 6: elevator car
- 6a: roof of the elevator car
- 7a: landing control panel
- 7b: elevator car control panel
- 8: landing
- 9: motor
- 10: landing door
- 10a: landing door panel
- 11: elevator car door
- 12: shaft
- 13: stator
- 14: elevator car guide rail
- 15: elevator controller
- 16: counterweight
- 17: drive
- 18: rotor
- 19: counterweight guide rail
- 20: brake
- 21: first bearing stand
- 22: second bearing stand
- 24: first bearing
- 25: second bearing
- 26: sheave portion
- 26a: first sheave
- 26b: second sheave
- 28: spacer structure
- 30: sensor arrangement
- 32: retainer
- 36: sensor housing
- 38: rotational sensor
- 40: spacer elements
- 42: brake disc
- 44: stationary braking element
- 46: plunger
- 48: actuator
- 50: solenoid
- 52: bedplate
- 54: conventional elevator machine

## Claims

1. Elevator machine (5) for driving an elevator car (6) in an elevator system (2), wherein the elevator machine (5) comprises:
a rotatable shaft (12) extending along an axial direction (A) and including a sheave portion (26) for coupling the shaft (12) to at least one tension member (3), in particular to at least one belt, that is coupled to the elevator car (6);
a motor (9) that is configured for rotationally driving the shaft (12); and
a brake (20) for braking rotation of the shaft (12);
wherein the motor (9), the brake (20) and the sheave portion (26) are arranged along the axial direction (A) with the brake (20) arranged between the motor (9) and the sheave portion (26).

2. Elevator machine (5) according to claim 1, wherein the brake (20) comprises
a brake disc (42) that is coupled to the shaft (12) for rotating concurrently with the shaft (12);
at least one plunger (46) that is movable along the axial direction (A) between an engaged position in which it engages with the brake disc (42) for braking rotation of the brake disc (42) and a released position in which it is not engaged with the brake disc (42); and
at least one actuator (48) that is configured for selectively moving the at least one plunger (46) from the engaged position into the released position;
wherein the at least one actuator (48) is accommodated in a first bearing stand (21) comprising a first bearing (24) rotatably supporting a first portion of the shaft (12), with the first bearing stand (21) comprised in, or mounted to, a stator (13), in particular at a side of the stator (13) facing the sheave portion (26).

3. Elevator machine (5) according to claim 2, wherein the brake disc (42) and the at least one plunger (46) are arranged outside the first bearing stand (21) and/ or outside the stator (13).

4. Elevator machine (5) according to claim 2, wherein the brake disc (42) and the at least one plunger (46) are arranged inside the first bearing stand (21) and/or inside the stator (13).

5. Elevator machine (5) according to any of claims 2 to 4, wherein the at least one plunger (46) is arranged between the motor (9) and the brake disc (42).

6. Elevator machine (5) according to any of claims 2 to 4, wherein the brake disc (42) is arranged between the motor (9) and the at least one plunger (46).

7. Elevator machine (5) according to any of the preceding claims comprising:
a second bearing stand (22) comprising a second bearing (25) rotatably supporting a second portion of the shaft (12);
wherein the second bearing stand (22) and the second bearing (25) are arranged on a side of the sheave portion (26) opposite to the first bearing stand (21).

8. Elevator machine (5) according to claim 7 comprising a spacer structure (28) extending along the axial direction (A) between the first bearing stand (21) and the second bearing stand (22).

9. Elevator machine (5) according to claim 8, wherein the spacer structure (28) comprises a plurality of spacer elements (40);
wherein the plurality of spacer elements (40) forms a cylindrical spacer structure (28) surrounding the shaft (12); and/or
wherein at least one of the spacer elements (40) has in particular a cylindrical shape.

10. Elevator machine (5) according to claim 7 that does not comprise a spacer structure (28) extending between the first and second bearing stands (21, 22).

11. Elevator machine (5) according to any of claims 7 to 10, wherein the distance (D) between an outer end face (34) of the elevator machine (5) facing away from the sheave portion (26) and a center of the sheave portion (26) is less than 150 mm, wherein the distance (D) between the outer end face (34) of the elevator machine (5) and the center of the sheave portion (26) is in particular less than 140 mm.

12. Elevator machine (5) according to any of the preceding claims, wherein the sheave portion (26) comprises a plurality of sheaves (26a, 26b), wherein each of the plurality of sheaves (26a, 26b) is configured for coupling with a corresponding tension member (3), such as a belt, respectively.

13. Elevator system (2) comprising:
a hoistway (4) extending between a plurality of landings (8);
an elevator car (6) that is configured for traveling along the hoistway (4) between the plurality of landings (8);
at least one guide rail (14, 19) for guiding the movement of the elevator car (6) in the hoistway (4);
at least one tension member (3), in particular a belt, that is coupled to the elevator car (6); and
an elevator machine (5) according to any of claims 1 to 12 with the at least one tension member (3) being coupled to the sheave portion (26) of the elevator machine (5);
wherein the at least one guide rail (14, 19) is arranged in line with the elevator machine (5) along the axial direction (A);
wherein the at least one guide rail (14, 19) is in particular arranged adjacent to an end face (34) of the elevator machine (5) along the axial direction (A);
wherein the at least one guide rail (14, 19) is more particularly arranged adjacent to an end face (34) of the elevator machine (5) that is located on a side of the sheave portion (26) that is opposite to the motor (9).

14. Elevator system (2) according to claims 13 further comprising a bedplate (52),
wherein the elevator machine (5) is arranged on the bedplate (52), and
wherein the distance (d₂) between the at least one guide rail (14, 19) and the bedplate (52) is less than 70 mm, wherein the distance (d₂) between the at least one guide rail (14, 19) and the bedplate (52) is in particular less than 50 mm.

15. Method of installing an elevator machine (5) according to any of claims 1 to 12 and a guide rail (14, 19) in a hoistway (4) of an elevator system (2),
wherein the method includes arranging the at least one guide rail (14, 19) and the elevator machine (5) in a configuration in which the at least one guide rail (14, 19) is arranged in line with the elevator machine (5) along the axial direction (A);
wherein the at least one guide rail (14, 19) is in particular arranged adjacent to an end face (34) of the elevator machine (5) along the axial direction (A);
wherein the at least one guide rail (14, 19) is more particularly arranged adjacent to an end face (34) of the elevator machine (5) that is located on the side of the sheave portion (26) opposite the motor (9).
